# EUROPEAN PATENT APPLICATION

(11) **EP 2 645 319 A2**
(43) Date of publication of application: **02.10.2013**
(21) Application number: 13157692.8
(22) Date of filing: 04.03.2013
(51) Int. Cl.: G06Q 10/10, G06Q 30/02

(54) **Advertising system, advertising method and external network-compatible device**

(30) Priority: 28.03.2012 JP 2012073965
(71) Applicant: Funai Electric Co., Ltd., Daito-shi Osaka 574-0013 (JP)
(72) Inventor: Matsumura, Akifumi, Osaka, Osaka 574-0013 (JP)
(74) Representative: Giovannini, Francesca

(57) **Abstract**

An advertising system (100) includes a server (20) that is provided on an external network and that stores advertising information, an external network-compatible device (10) capable of acquiring the advertising information from the server (20) via the external network, and an external network-incompatible device (40) that is not capable of acquiring the advertising information from the server (20) via the external network. The external network-compatible device (10) is configured to acquire, from among the advertising information stored in the server (20), certain advertising information that corresponds to the external network-incompatible device (40), and send it to the external network-incompatible device (40). The advertising information contains deadline information, and the external network-compatible device (10) is further configured to delete from the storage unit (2) certain advertising information, from among the advertising information stored in the storage unit (2), whose deadline has passed.

## Description

### [Technical Field]

The present invention relates to an advertising system, an advertising method and an external network-compatible device, and in particular, to an advertising system that acquires advertising information from a server, an advertising method and an external network-compatible device.

### [Background Art]

An advertising system that acquires advertising information from a server has been known since the past (for example, refer to Patent Reference 1).

Patent Reference 1 discloses a communication system (advertising system) including a server for providing advertising data provided on the Internet (external network), and a client computer (external network-compatible device) that acquires advertising data (advertising information) from the server for providing advertising data via the Internet. This client computer is configured so as to display advertising at a prescribed time based on advertising data acquired from the server for providing advertising data.

### [Patent References]

[Patent Reference 1] Japanese Unexamined Patent Application Publication No. H9-325938

In the communication system (advertising system) of Patent Reference 1, the opportunities to deliver advertising to a user are limited and it is difficult to obtain sufficient advertising effect because advertising is displayed only on client computers (external network-compatible devices) capable of acquiring advertising data (advertising information) via the Internet (external network).

### [Summary of the Invention]

One or more embodiments of the present invention provide an advertising system, an advertising method and an external network-compatible device capable of increasing advertising effect by increasing the opportunities to deliver advertising to a user.

According to one aspect of the present invention, an advertising system is provided. The advertising system includes a server that is provided on an external network and that stores advertising information; an external network-compatible device capable of acquiring the advertising information from the server via the external network; and an external network-incompatible device that is not capable of acquiring the advertising information from the server via the external network, wherein the external network-compatible device is configured to acquire, from among the advertising information stored in the server, certain advertising information corresponding to the external network-incompatible device, and send it to the external network-incompatible device. Note that advertising information is not limited to promotional advertising for commercial purposes, but is a broad concept that includes information other than promotional advertising for commercial purposes, such as news releases and recall information.

According to this aspect of the present invention, due to the fact that an external network-compatible device is configured so as to acquire the advertising information that corresponds to an external network incompatible device, among the advertising information stored on the server, and send it to the external network-incompatible device as described above, advertising information can be provided even to an external network-incompatible device, and as a result, advertising based on advertising information for a user can be delivered not only to an external network-compatible device but to an external network-incompatible device as well. As a result, based on identification information of the external network-incompatible device, advertising information that corresponds to the external network-incompatible device, among the advertising information stored on the server, is sent to the external network-incompatible device, and as a result, advertising that corresponds to the user's own device can be delivered to the user on an external network-incompatible device. Therefore, advertising of interest for the user who uses this external network-incompatible device can be provided, and advertising effect can be increased.

According to one embodiment of the advertising system, the external network-compatible device is further configured to send to the external network-incompatible device the certain advertising information corresponding to the external network-incompatible device after converting the certain advertising information to a format compatible with the external network-incompatible device. If configured in this manner, advertising based on advertising information acquired from the server can be easily delivered to the user on an external network-incompatible device even if the format of the advertising information stored on the server is not compatible with the external network-incompatible device.

According to one embodiment of the advertising system, the external network-compatible device is further configured to select a certain server from among a plurality of servers on the external network based on identification information of the external network-incompatible device, acquire, from the certain server, the certain advertising information corresponding to the external network-incompatible device, and send the acquired advertising information to the external network-incompatible device. If configured in this manner, the advertising information that corresponds to the external network-incompatible device, among the plurality of advertising information stored on a plurality of servers on the external network, can be easily acquired and delivered to the user on an external network-incompatible device.

According to one embodiment of the advertising system, the external network-compatible device is further configured to incorporate the certain advertising information corresponding to the external network-incompatible device into content information output by the external network-incompatible device, and send it to the external network-incompatible device. If configured in this manner, when content is output, advertising based on advertising information incorporated in the information of the content can be easily delivered by the external network-incompatible device.

According to one embodiment of the advertising system, the external network-compatible device has a host function on an internal network constructed from a plurality of devices including the external network-incompatible device. According to one embodiment, the external network-compatible device is configured to send to the external network-incompatible device the certain advertising information corresponding to the external network-incompatible device together with control information for the external network-incompatible device. If configured in this manner, advertising information can be easily sent from an external network-compatible device to an external network-incompatible device using an internal network.

In this case, the external network-compatible device may be further configured to send to another external network-compatible device certain advertising information corresponding to the another external network-compatible device on the internal network together with control information for the another external network-compatible device. If configured in this manner, advertising information that corresponds to the external network-incompatible device can be sent to not only to an external network-incompatible device on an internal network, but advertising information can be easily sent to another external network-compatible device on the internal network using the internal network.

According to one embodiment of the present invention, the external network-compatible device is further configured to send to the external network-incompatible device the certain advertising information corresponding to the external network-incompatible device during waiting time of a prescribed operation in the external network-compatible device. If configured in this manner, the waiting time during operations of the external network-compatible device can be effectively utilized as time for delivery of advertising to a user because advertising can be delivered by the external network-incompatible device using waiting time during prescribed operations in the external network-compatible device.

According to one embodiment of the advertising system, the external network-compatible device comprises a storage unit capable of storing the advertising information acquired from the server, and is configured to send to the external network-incompatible device the certain advertising information, from among the advertising information stored in the storage unit, corresponding to the external network-incompatible device. If configured in this manner, advertising information can be sent more quickly because advertising information stored in the storage unit is sent to the external network-incompatible device, which differs from the case where advertising information is sent to the external network-incompatible device in real time while being acquired from the server.

In this case, the advertising information may contain deadline information, and the external network-compatible device may be configured to delete from the storage unit certain advertising information, from among the advertising information stored in the storage unit, whose deadline has passed. If configured in this manner, delivery by the external network-incompatible device of old advertising whose deadline has passed can be prevented.

According to one embodiment of the advertising system, the external network-compatible device and the external network-incompatible device are each further configured to deliver advertising to a user based on the certain advertising information during waiting time of a prescribed operation. If configured in this manner, the waiting time during operations of the external network-compatible device and the external network-incompatible device can be effectively utilized as time for delivery of advertising to a user because advertising can be delivered using waiting time during prescribed operations in the external network-compatible device and the external network-incompatible device.

In this case, the external network-compatible device may be further configured to switch the delivery configuration of advertising that is based on the certain advertising information based on length of the waiting time during the prescribed operation. If configured in this manner, advertising can be effectively delivered according to the length of the waiting time, such as by changing the number of delivered advertisements.

According to one aspect of the present invention, an advertising method is provided. The advertising method includes acquiring advertising information stored on a server via an external network, and sending to an external network-incompatible device based on identification information of the external network-incompatible device certain advertising information, from among the advertising information stored in the server, corresponding to the external network-incompatible device, wherein the external network-incompatible device is not capable of acquiring the advertising information from the server via the external network.

According to this aspect of the present invention, by providing the steps of acquiring advertising information stored on a server via an external network and sending the advertising information to an external network-incompatible device which is not capable of acquiring the advertising information from the server via the external network as described above, advertising information can be provided even to an external network-incompatible device, and as a result, advertising based on advertising information for a user can be delivered not only to an external network-compatible device but to an external network-incompatible device as well. As a result, based on identification information of the external network-incompatible device, advertising information that corresponds to the external network-incompatible device, among the advertising information stored on the server, is sent to the external network-incompatible device, and as a result, advertising that corresponds to the user's own device can be delivered to the user on an external network-incompatible device. Therefore, advertising of interest for the user who uses this external network-incompatible device can be provided, and advertising effect can be increased.

According to one aspect of the present invention, an external network-compatible device is provided. The external network-compatible device includes a communication unit capable of acquiring advertising information stored on a server via an external network, and a control unit intended to send to an external network-incompatible device based on identification information of the external network-incompatible device certain advertising information, from among the advertising information stored in the server, corresponding to the external network-incompatible device, wherein the external network-incompatible device is not capable of acquiring the advertising information from the server via the external network.

According to one embodiment of the external network-compatible device, advertising information can be provided to an external network-incompatible device due to the fact that a control unit is provided, which performs control so as to send the advertising information that corresponds to an external network-incompatible device which is not capable of acquiring the advertising information from the server via the external network as described above, and as a result, advertising based on advertising information for a user can be delivered not only to an external network-compatible device but to an external network-incompatible device as well. As a result, opportunities to deliver advertising to the user can be increased and advertising effect can be increased. Furthermore, due to the fact that a control unit performs control so as to send the advertising information that corresponds to an external network-incompatible device which is not capable of acquiring the advertising information from the server via the external network, among the advertising information stored on the server, to the external network-incompatible device based on identification information of the external network-incompatible device, advertising that corresponds to the user's own device can be delivered to the user on an external network-incompatible device. Therefore, advertising of interest for the user who uses this external network-incompatible device can be provided, and advertising effect can be increased.

According to one or more embodiments of the present invention, as described above, opportunities to deliver advertising to the user can be increased and advertising effect can be increased.

### [Brief Description of the Drawings]

FIG. 1 is a schematic diagram illustrating the overall configuration of an advertising system according to a first embodiment of the present invention.
FIG. 2 is a flowchart illustrating the acquisition and sending process of advertising information in the advertising system according to the first embodiment of the present invention.
FIG. 3 is a flowchart illustrating the advertising display process in the advertising system according to the first embodiment of the present invention.
FIG. 4 is a schematic diagram illustrating the overall configuration of an advertising system according to a second embodiment of the present invention.
FIG. 5 is a block diagram illustrating the configuration of a television of the advertising system according to the second embodiment of the present invention.
FIG. 6 is a schematic diagram illustrating the overall configuration of an advertising system according to a third embodiment of the present invention.
FIG. 7 is a flowchart illustrating the advertising sending process in the advertising system according to a third embodiment of the present invention.

### [Detailed Description of Embodiments of the Invention]

Embodiments of the present invention will be described below based on the drawings.

### (First embodiment)

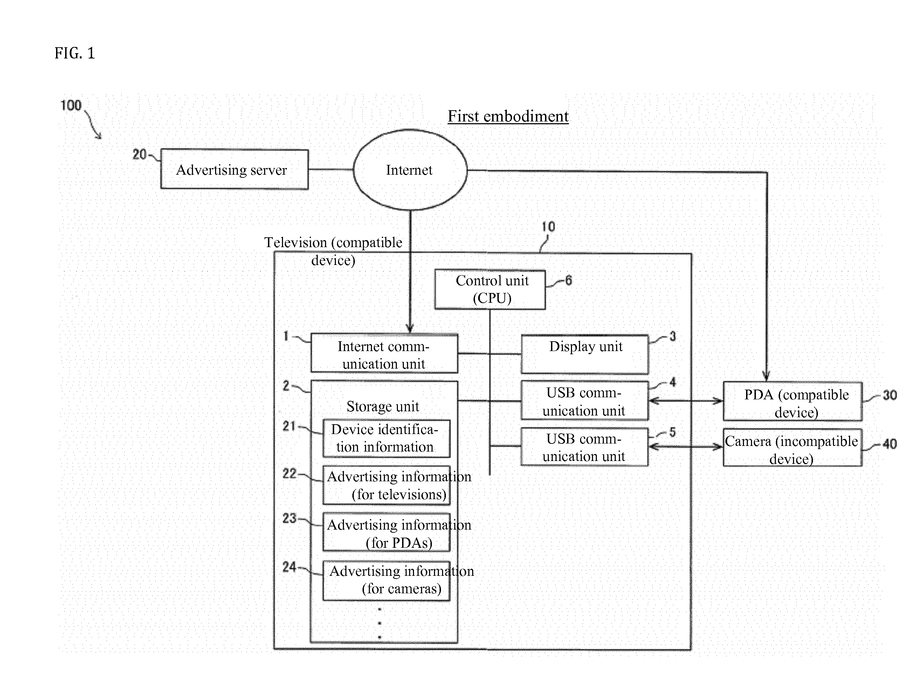

The configuration of an advertising system 100 according to a first embodiment of the present invention will be described below in reference to FIG. 1.

The advertising system 100 according to the first embodiment comprises a television 10 that is capable of connection to the Internet, an advertising server 20 provided on the Internet, a PDA (portable information terminal) 30 that is capable of connection to the television 10, and a camera 40 that is capable of connection to the television 10. Note that the Internet is an example of the "external network" of the present invention, and the television 10 is an example of the "external network-compatible device" of the present invention. Further, the camera 40 is an example of the "external network-incompatible device" of the present invention, and the advertising server 20 is an example of the "server" of the present invention.

The television 10 is an external network-compatible device capable of acquiring advertising information stored on the advertising server 20 via the Internet. It is configured so as to be capable of sending advertising information to the camera 40, which is an external network-incompatible device that is not capable of acquiring the advertising information stored on the advertising server 20 via the Internet. The television 10 is also configured so as to be capable of sending advertising information to the PDA 30, which is an external network-compatible device capable of acquiring the advertising information stored on the advertising server 20 via the Internet. The television 10 also comprises an Internet communication unit 1, a storage unit 2, a display unit 3, USB communication units 4 and 5, and a control unit 6.

The Internet communication unit 1 is Ethernet^{™}-compatible, and is provided in order to connect the television 10 to the Internet. The television 10 is also configured so as to be capable of acquiring advertising information from the advertising server 20 provided on the Internet via the Internet communication unit 1. Note that the Internet communication unit 1 is an example of the "communication unit" of the present invention.

The storage unit 2 is non-volatile memory that can be overwritten, and is configured so as to be capable of storing device identification information 21 stipulated by the identification information of the external devices (the PDA 30 and camera 40) connected to the television 10. The external device identification information includes device type information (for example, information related to the type such as PDA, camera or recorder), and device manufacturer (maker) information. Also, a plurality of advertising information acquired from the advertising server 20 is stored in the storage unit 2. Specifically, a plurality of advertising information that corresponds to each type of device, such as advertising information for televisions 22, advertising information for PDAs 23 and advertising information for cameras 24, are stored in the storage unit 2.

The display unit 3 is made up of a liquid crystal display, and is configured so as to be capable of displaying video based on a television broadcast signal received by a television broadcast receiver not shown in the drawings. The USB communication units 4 and 5 are compatible with the USB standard, and are provided in order to perform two-way communication with an external device such as the PDA 30 or camera 40.

The control unit 6 is made up of a CPU, and is configured so as to control the overall operation of the television 10 by executing computer programs not shown in the drawings. The control unit 6 is also configured so as to execute the advertising information acquisition and sending process and the advertising display process to be described later. The control unit 6 is further configured so as to control deletion from the storage unit 2 of the advertising information stored in the storage unit 2 whose deadline has passed based on deadline information to be described later contained in the advertising information. The control unit 6 is also configured so as to acquire device-unique identification information from external devices (for example, the PDA 30 and camera 40) connected to the television 10 via the USB communication units 4 and 5.

On the advertising server 20, a plurality of advertising information for various devices is stored for each device, such as a television, PDA or camera. Each piece of advertising information also contains deadline information which stipulates the deadline of the advertising.

The PDA 30 is an Internet-compatible device capable of connection to the Internet. The PDA 30 is also configured so as to be capable of acquiring advertising information from the advertising server 20 via the Internet. The camera 40 is an Internet-incompatible device which does not have the function of connecting to the Internet. For this reason, the camera 40 cannot acquire advertising information from the advertising server 20 via the Internet. The camera 40 is also configured so as to be capable of displaying advertising based on advertising information sent from the television 10 on a display unit not shown in the drawings. Further, the camera 40 is configured so as to be capable of displaying advertising based on advertising information sent from the television 10 during the waiting time of certain operations of the camera 40. Specifically, the camera 40 is capable of displaying advertising during the waiting time while receiving still image data or movie content data transmitted from the television 10.

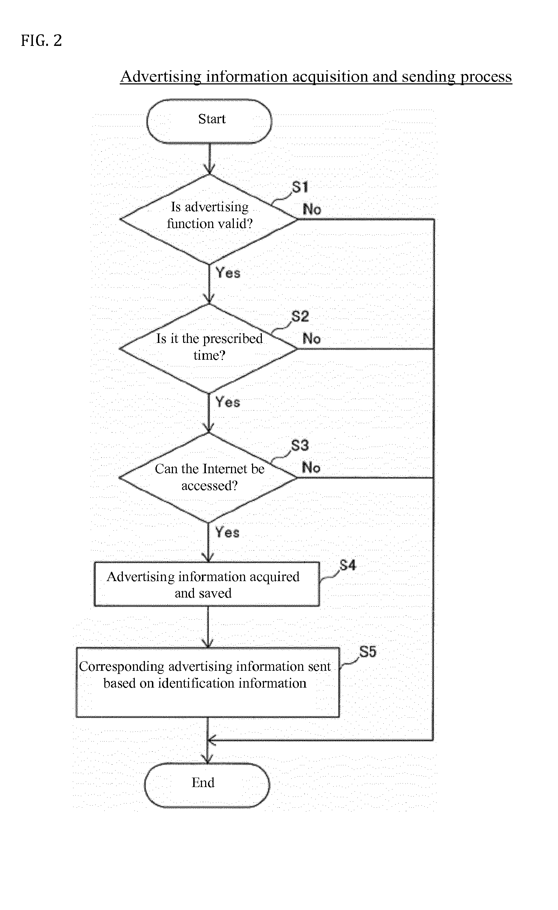

Next, the advertising information acquisition and sending process executed by the control unit 6 of the television 10 according to the first embodiment will be described in reference to FIG. 2.

In step S1, the control unit 6 judges whether or not the advertising function that acquires advertising information from the advertising server 20 has been set to "valid." In the television 10 of the first embodiment, the user may set the advertising function to valid or invalid as desired. If the advertising function is not valid (when invalid), the process ends there. On the other hand, if the advertising function is valid, in step S2, the control unit 6 judges whether or not it is the prescribed time set in advance by the user. The user can set any prescribed time so as to avoid times when the Internet tends to be busy and so forth. If it is not the prescribed time, the process ends there. If it is the prescribed time, in step S3, the control unit 6 judges whether or not the Internet is accessible.

If the Internet cannot be accessed, the process ends there. If the Internet is accessible, in step S4, the control unit 6 acquires advertising information from the advertising server 20 via the Internet and saves it in the storage unit 2. At this time, a plurality of types of advertising information are acquired from the advertising server 20 and stored, such as advertising information for televisions 22 and advertising information for PDAs 23.

After that, in step S5, the control unit 6 sends the advertising information that corresponds to each type of device based on identification information of the external device stipulated in the device identification information 21. Specifically, the control unit 6 controls sending of advertising information for PDAs, among the plurality of advertising information stored in the storage unit 2, to the PDA 30 based on the identification information of the PDA 30 acquired via the USB communication unit 4. The control unit 6 also controls sending of advertising information for cameras, among the plurality of advertising information stored in the storage unit 2, to the camera 40 based on the identification information of the camera 40 acquired via the USB communication unit 5.

The control unit 6 is also capable of control so as to send the advertising information of the storage unit 2 to an Internet-incompatible device after converting it to a format compatible with the Internet-incompatible device that is the send destination. For example, in the case where the Internet-incompatible camera 40 is not compatible with advertising information in HTML (hypertext markup language) format but is compatible with PDF (portable document format) files, the control unit 6 is capable of controlling the sending of HTML format advertising information to the camera 40 after conversion to a PDF file. Furthermore, the control unit 6 is also capable of sending advertising information incorporated into content information that can be output by the destination Internet-incompatible device. For example, the control unit 6 is capable of controlling the sending of movie content after image processing such that advertising is displayed based on the advertising information as part of the movie content at the beginning or end of movie content that can be played back by the Internet-incompatible camera 40. Note that in the first embodiment, the function of sending advertising information after format conversion and the function of sending advertising information incorporated into content information can be set to valid or invalid by the user as desired.

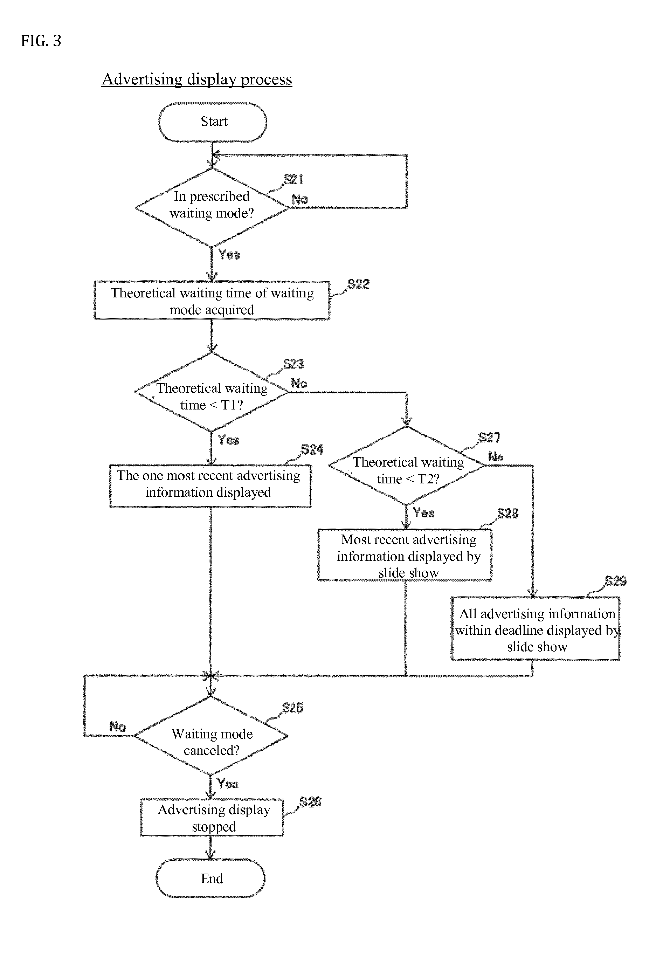

Next, the advertising display process executed by the control unit 6 of the television 10 according to the first embodiment will be described in reference to FIG. 3.

First, in step S21, the control unit 6 judges whether or not the television 10 is in a prescribed waiting mode, and it repeats this judgment until it enters waiting mode. A prescribed waiting mode means the state in which waiting time is generated during the operations of the television 10. Waiting time during operations of the television 10 may be waiting time when starting up, waiting time when switching functions, waiting time when shifting to standby mode, waiting time when downloading data, waiting time during data communication with an external device, and so forth.

When it enters a prescribed waiting mode, in step S22, the control unit 6 acquires the theoretical waiting time of the waiting mode. The theoretical waiting time of the waiting mode is a theoretical waiting time set in advance for each type of waiting time. For example, when it enters waiting mode when the television 10 starts up, the time assumed to be the waiting time during startup (for example, 10 seconds) is set as the theoretical waiting time during startup. Also, during data download or during data communication with an external device, a plurality of theoretical waiting times may be set in accordance with the corresponding amount of data (amount of communication).

Then, in step S23, the control unit 6 judges whether or not the theoretical waiting time in the current waiting mode is shorter than a threshold value T1 (for example, 5 seconds), and if the theoretical waiting time is less than T1, in step S24, it performs control so as to display one advertisement on the display unit 3 based on the most recent advertising information among the advertising information for televisions 22 in the storage unit 2. After that, in step S25, the control unit 6 judges whether or not waiting mode has been canceled (waiting time has ended), and repeats this judgment unit waiting mode is canceled. When waiting mode is canceled, in step S26, the control unit 6 stops advertising display and ends the advertising display process.

On the other hand, if the theoretical waiting time is greater than or equal to T1, in step S27, the control unit 6 judges whether or not the theoretical waiting time is shorter than a threshold value T2 (for example, 10 seconds). If the theoretical waiting time is less than T2, in step S28, the control unit 6 performs control so as to display a plurality of advertisements, based on the most recent advertising information in the storage unit 2, as a slide show on the display unit 3. If the theoretical waiting time is greater than or equal to time T2, in step S29, the control unit 6 performs control so as to display a plurality of advertisements, based on all advertising information in the storage unit 2 whose deadline has not passed, as a slide show on the display unit 3. In this manner, in the television 10 of the first embodiment, the advertising display configuration is switched based on the length of waiting time. Also, if there is a request from the user for details about advertising displayed on the display unit 3, the control unit 6 may perform control so as to stop or temporarily suspend the operation of the television 10 that is generating waiting time (such as a function switching operation or standby mode shift operation) and display advertising detail information on the display unit 3. Also, if there is a request for advertisement details, the control unit 6 may perform control so as to store the corresponding advertisement in the storage unit 2 so that it can be displayed later.

In the first embodiment, by configuring the control unit 6 of the television 10, which is an Internet-compatible device, such that it acquires advertising information from the advertising server 20 via the Internet and sends it to the camera 40, which is an Internet-incompatible device, as described above, advertising information can also be provided to the camera 40, and as a result, advertising based on advertising information for the user can be delivered not only by the television 10 but by the camera 40 as well. As a result, the opportunities for delivering advertising to the user can be increased and advertising effect can be increased. Further, due to the fact that advertising information that corresponds to the camera 40, among the advertising information stored on the advertising server 20, is sent by the television 10 to the camera 40 based on identification information of the camera 40, advertising that corresponds to the user's own device can be delivered to the user on the camera 40. Therefore, advertising of interest for the user who uses the camera 40 can be provided, and advertising effect can be increased.

In the first embodiment, the control unit 6 is configured so as to send advertising information that corresponds to the camera 40 after conversion to a format compatible with the camera 40 to the camera 40. As a result, advertising based on advertising information acquired from the advertising server 20 can be easily delivered to the user on the camera 40 even if the format of the advertising information stored on the advertising server 20 is not compatible with the camera 40.

In the first embodiment, the control unit 6 is configured so as to incorporate the advertising information that corresponds to the camera 40 into content information output by the camera 40, and send it to the camera 40. As a result, advertising based on advertising information incorporated into the content information can be easily delivered when content is output by the camera 40.

In the first embodiment, the control unit 6 is configured so as to send to the camera 40 the advertising information that corresponds to the camera 40, among the advertising information stored in the storage unit 2. As a result, advertising information can be sent more quickly because advertising information stored in the storage unit 3 is sent to the camera 40, which differs from the case where advertising information is sent to the camera 40 in real time while being acquired from the advertising server 20.

In the first embodiment, the control unit 6 is configured so as to delete from the storage unit 3 the advertising information whose deadline has passed, among the advertising information stored in the storage unit 3. As a result, delivery of old advertising whose deadline has passed can be prevented.

In the first embodiment, the television 10 and camera 40 are each configured so as to deliver advertising to the user based on advertising information during waiting time during prescribed operations. As a result, the waiting time during operations of the television 10 and camera 40 can be effectively utilized as time for delivery of advertising to a user because advertising can be delivered using waiting time during prescribed operations in the television 10 and camera 40.

In the first embodiment, the control unit 6 is configured so as to switch the delivery configuration of advertising based on the advertising information, based on the length of waiting time during the prescribed operation. As a result, advertising can be effectively delivered according to the length of the waiting time, such as by changing the number of delivered advertisements.

### (Second embodiment)

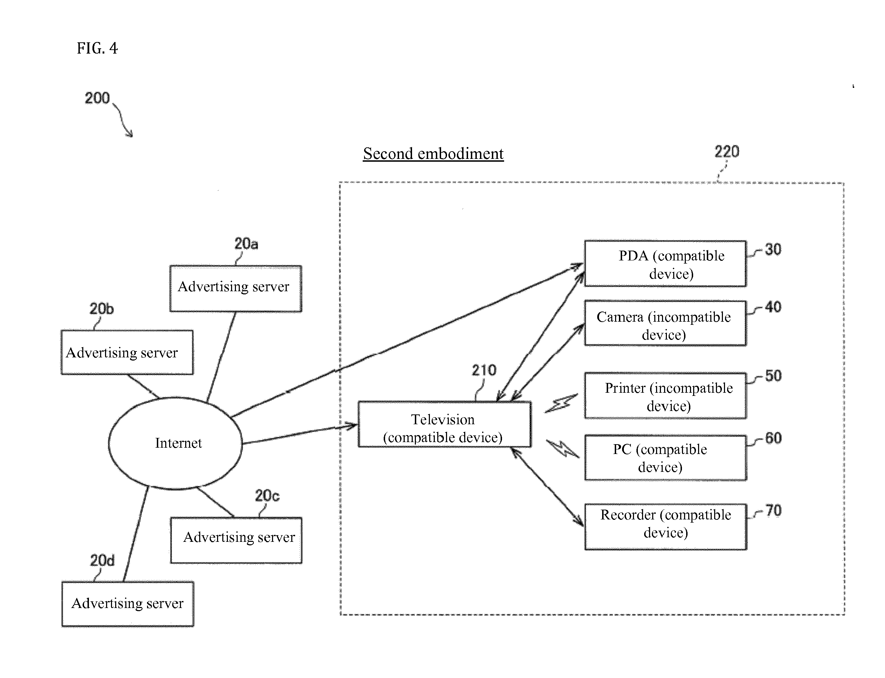

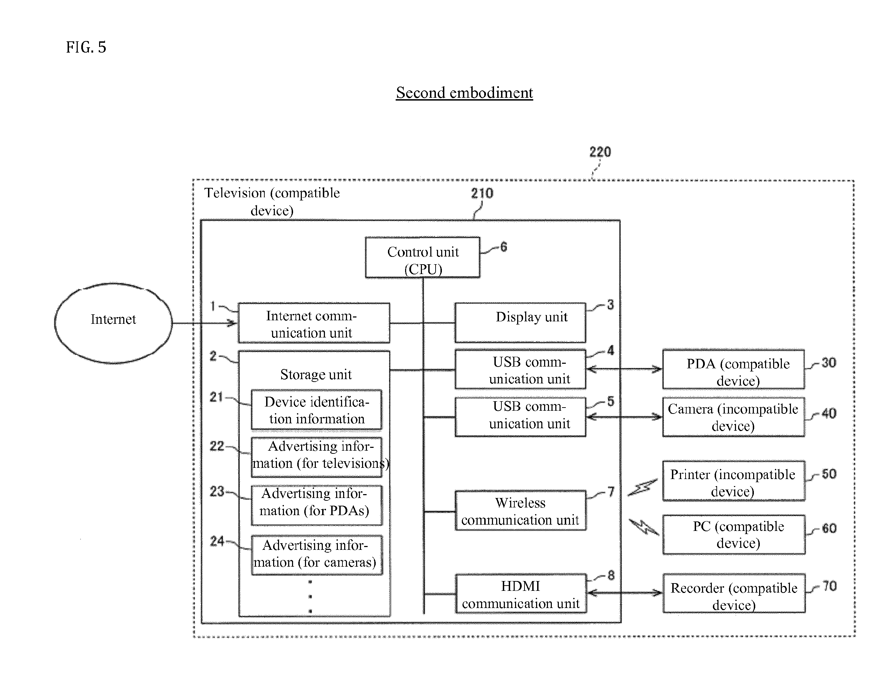

Next, the configuration of an advertising system 200 according to a second embodiment of the present invention will be described in reference to FIG. 4 and FIG. 5. In this second embodiment, as opposed to the above first embodiment, a configuration in which a television 210 which constitutes the advertising system 200 has a host function on a home network 220 will be described. Note that the television 210 is an example of the "external network-compatible device" of the present invention, and the home network 220 is an example of the "internal network" of the present invention.

As shown in FIG. 4, the advertising system 200 according to the second embodiment comprises a television 210 which is an Internet-compatible device, a plurality of advertising servers 20a-20d provided on the Internet, and a PDA (portable information terminal) 30, a camera 40, a printer 50, a PC (personal computer) 60 and a recorder 70, which are capable of connecting to the television 210. Note that the camera 40 and the printer 50 are examples of the "external network-incompatible device" of the present invention.

As shown in FIG. 5, the television 210 is further equipped with a wireless communication unit 7 and an HDMI^{™} (high-definition multimedia interface) communication unit 8, in addition to the configuration of the television 10 of the first embodiment. Also, the television 210, together with the PDA 30, camera 40, printer 50, PC 60 and recorder 70 connected to the television 210, constitute the home network 220. The television 210 also has a host function on the home network, and is configured so as to be capable of transmitting control information (control signals) for controlling the operations of the other devices on the home network 220. The television 210 is an external network-compatible device capable of acquiring advertising information stored on the advertising servers 20a-20d via the Internet. Further, the television 210 is configured so as to be capable of sending advertising information acquired from the advertising servers 20a-20d to both external network-compatible devices and external network-incompatible devices on the home network 220.

The wireless communication unit 7 is compatible with Bluetooth^{™} communication, and is provided in order to perform two-way communication with external devices. The HDMI communication unit 8 is compatible with the HDMI standard, and is provided in order to perform two-way communication with external devices.

The advertising servers 20a-20d store mutually different advertising information, such as that for televisions and that for PDAs.

The printer 50 is an Internet-incompatible device which does not have the function of connecting with the Internet. The printer 50 is connected to the television 210 via the wireless communication unit 7. The PC 60 is an Internet-compatible device which is capable of connecting to the Internet, and is configured so as to be capable of acquiring advertising information from any of the advertising servers 20a-20d via the Internet. The PC 60 is connected to the television 210 via the wireless communication unit 7. The recorder 70 is an Internet-compatible device capable of connecting to the Internet, and is configured so as to be capable of acquiring advertising information from any of the advertising servers 20a-20d via the Internet. The recorder 70 is connected to the television 210 via the HDMI communication unit 8. Also, in the second embodiment, the devices on the home network 220 can transmit and receive advertising information among each other.

Next, the configuration of the control unit 6 of the television 210 which has a host function of the home network 220 will be described in detail. The control unit 6 is configured so as to acquire device-unique identification information from the external devices connected to the television 210 via the USB communication units 4 and 5, the wireless communication unit 7 and the HDMI communication unit 8. The control unit 6 is also configured so as to perform control so as to select a certain advertising server from among the plurality of advertising servers 20a-20d on the Internet based on the acquired identification information and to acquire advertising information that corresponds to the external devices connected to the television 210. The control unit 6 also performs control so as to send the acquired advertising information to the corresponding external devices. For example, the control unit 6 performs control so as to select a certain advertising server that stores advertising information for printers, among the plurality of advertising servers 20a-20d, based on the identification information of the printer 50, and acquires the advertising information that corresponds to the printer 50. Then, the control unit 6 delivers the acquired advertising information for printers to the printer 50. At this time, the control unit 6 performs control so as to send the advertising information for printers to the printer 50 together with control information for the printer 50 such as a startup signal for starting up the printer 50. The control unit 6 is also capable of sending advertising information that corresponds to the send destination device together with control information for other Internet-incompatible devices and Internet-compatible devices on the home network 220.

Note that the configuration of the second embodiment is otherwise the same as that of the first embodiment.

In the second embodiment, as described above, the control unit 6 is configured so as to select a certain advertising server, among the plurality of advertising servers 20a-20d on the Internet, based on the identification information of the external devices and to acquire advertising information that corresponds to the external devices connected to the television 210. If configured in this manner, the advertising information that corresponds to the external devices, among the plurality of advertising information stored on a plurality of advertising servers 20a-20d on the Internet, can be easily acquired and delivered to the user on an external device.

In the configuration of the second embodiment, the control unit 6 of the television 210 that has a host function of the home network 220 is also configured so as to send advertising information that corresponds to external devices together with control information for the external devices. If configured in this manner, advertising information can be easily sent from the television 210 to the external devices using the home network 220.

In the configuration of the second embodiment, similar to the first embodiment, the control unit 6 of the television 210 which is an Internet-compatible device is configured so as to acquire advertising information from advertising servers 20a-20d via the Internet and send it to Internet-incompatible devices. As a result, the opportunities for delivering advertising to the user can be increased and advertising effect can be increased.

Note that the effects of the second embodiment are otherwise the same as those of the first embodiment.

### (Third embodiment)

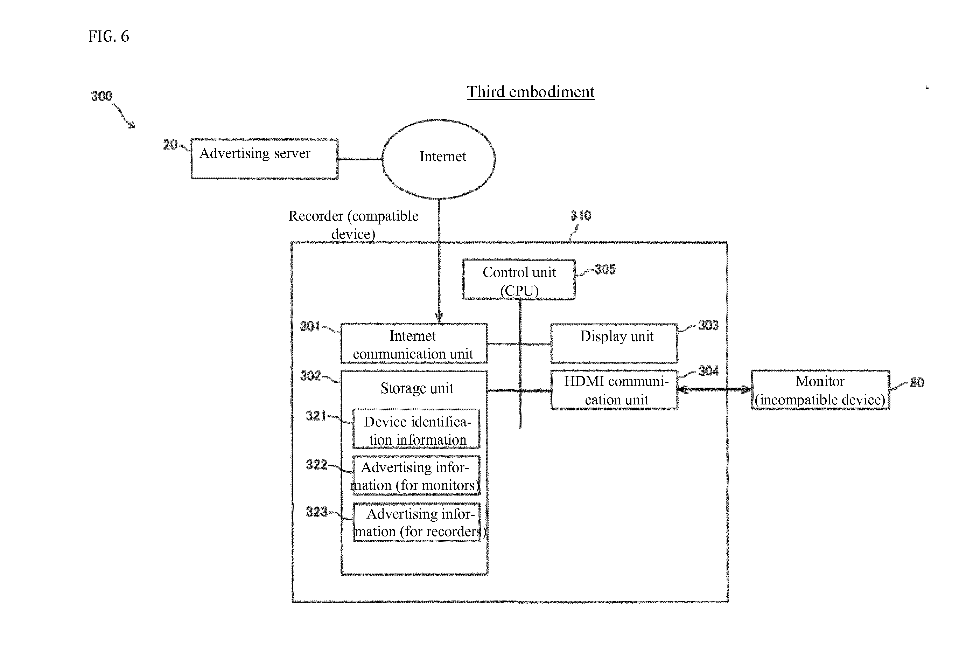

Next, the configuration of an advertising system 300 according to a third embodiment of the present invention will be described in reference to FIG. 6. In this third embodiment, as opposed to the above first embodiment, a configuration in which a monitor 80, which is an Internet-incompatible device, is connected to a recorder 310, which constitutes the advertising system 300, will be described. Note that the recorder 310 is an example of the "external network-compatible device" of the present invention, and the monitor 80 is an example of the "external network-incompatible device" of the present invention.

As shown in FIG. 6, the advertising system 300 according to the third embodiment comprises a recorder 310 which is an Internet-compatible device, an advertising server 20 provided on the Internet, and a monitor 80 which is an Internet-incompatible device.

The recorder 310 is capable of acquiring advertising information stored on the advertising server 20 via the Internet. The recorder 310 is also configured so as to be capable of sending advertising information to the monitor 80 which is an external network-incompatible device. The recorder 310 is further equipped with an Internet communication unit 301, a storage unit 302, a display unit 303, an HDMI communication unit 304, and a control unit 305. Note that the Internet communication unit 301 of the present invention is an example of the "communication unit" of the present invention. Also, the Internet communication unit 301, the storage unit 302 and the display unit 303 have the same configurations as the Internet communication unit 1, the storage unit 2 and the display unit 3, respectively, of the television 10 of the first embodiment. The control unit 305, similar to the control unit 6 of the television 10 of the first embodiment, is configured so as to perform control so as to acquire advertising information from the advertising server 20 on the Internet at a prescribed time and store it in the storage unit 302. For example, advertising information for monitors 322 and advertising information for recorders 323 are stored in the storage unit 302.

The monitor 80 is made up of a liquid crystal display, and is configured so as to be capable of displaying advertising or movie content based on advertising information acquired from externally. The monitor 80 does not have a storage unit that stores advertising information and content information acquired from externally. For this reason, the monitor 80 displays content in real time while acquiring information from externally, wherein the content is based on that information. Also, the monitor 80 is connected to the recorder 310 via the HDMI communication unit 304.

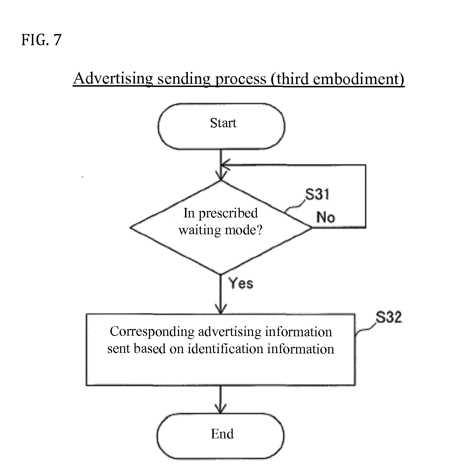

Next, the advertising sending process executed by the control unit 305 of the recorder 310 according to the third embodiment will be described in reference to FIG. 7.

First, in step S31, the control unit 305 judges whether or not the recorder 310 is in a prescribed waiting mode, and it repeats this judgment until it enters waiting mode. A prescribed waiting mode means the state in which waiting time is generated during the operations of the television recorder 310. Waiting time during operations of the recorder 310 may be waiting time when starting up, waiting time when switching functions, waiting time when shifting to standby mode, waiting time when downloading data, waiting time during data communication with an external device, and so forth.

When it enters a prescribed waiting mode, in step S32, the control unit 305 performs control so as to send advertising information that corresponds to the monitor 80 to the monitor 80 based on identification information of the monitor 80 stipulated in device identification information 321 in the storage unit 302. That is, the control unit 305 sends advertising information to the Internet-incompatible monitor 80 at the time when the recorder 310, which is the sending source, enters waiting mode. As a result, advertising is provided to the user via the Internet-incompatible monitor 80 connected to the recorder 310 during waiting time during operations of the recorder 310.

Note that the configuration of the third embodiment is otherwise the same as that of the first embodiment.

In the third embodiment, as described above, the control unit 305 is configured so as to send advertising information that corresponds to the Internet-incompatible monitor 80 to the monitor 80 during waiting time during certain operations in the recorder 310 which is an Internet-compatible device. If configured in this manner, the waiting time during operations of the recorder 310 can be effectively utilized as time for delivery of advertising to a user because advertising can be delivered by the monitor 80 using waiting time during prescribed operations in the recorder 310.

Also, in the configuration of the third embodiment, similar to the first embodiment, the control unit 305 is configured so as to acquire advertising information from the advertising server 20 via the Internet and send it to the monitor 80 which is an Internet-incompatible device, and as a result, the opportunities for delivering advertising to the user can be increased and advertising effect can be increased.

Note that the effects of the third embodiment are otherwise the same as those of the first embodiment.

Note that in the embodiments disclosed here, all points are examples and should not be considered restrictions. The scope of the present invention is indicated by the claims rather than being described by the aforementioned embodiments, and includes all modifications within the scope and meaning equivalent to the claims.

For example, in the first and second embodiments, a television is shown as an example of the external network-compatible device of the present invention, and in the third embodiment, a recorder is shown as an example of the external network-compatible device of the present invention, but the present invention is not limited thereto. An electronic device other than a television or recorder may be used as the external network-compatible device of the present invention.

Also, in the first through third embodiments, examples where shown in which advertising information that corresponds to a type of device is sent as the advertising information that corresponds to a device, but the present invention is not limited thereto. In the present invention, advertising information other than advertising information that corresponds to a type of device, such as advertising information that corresponds to a manufacturer of a device, may be sent, provided that it is advertising information that corresponds to the send destination device.

Further, in the first through third embodiments, examples where shown in which device information of the external devices is acquired via a communication unit such as a USB communication unit, but the present invention is not limited thereto. In the present invention, the device information of external devices may also be registered by manual input by the user.

In the first through third embodiments, examples where shown in which advertising information is sent to external devices via a communication unit such as a USB communication unit, but the present invention is not limited thereto. In the present invention, advertising information may also be sent to an external device via a recording medium such as a memory card.

In the first through third embodiments, examples where shown in which advertising information is acquired from an advertising server at a prescribed time preset by the user, but the present invention is not limited thereto. In the present invention, advertising information may also be acquired at a time other than a set time, such as, for example, standby time of the external network-compatible device. Advertising information may also be acquired at the time when advertising information is updated on the advertising server.

In the first through third embodiments, advertising that can be displayed on a display unit is shown as an example of advertising, but the present invention is not limited thereto. In the present invention, it may also be advertising that cannot be displayed on a display unit, such as audio advertising.

In the first and second embodiments, examples were shown in which advertising was displayed by a slide show while changing the number of advertisements based on the length of waiting time, but the present invention is not limited thereto. In the present invention, advertising can also be delivered in a configuration other than by changing the number of advertisements, such as playing back audio advertisements or movie advertisements of different playback times based on the length of waiting time.

In the first and second embodiments, examples were shown in which a theoretical waiting time was preset, but the present invention is not limited thereto. In the present invention, the corresponding theoretical waiting time can also be determined by computation each time waiting mode is entered.

In the second embodiment, a television was shown as an example of a device having a host function of a home network (internal network), but the present invention is not limited thereto. In the present invention, a device other than a television, such as a device made up of a control box that does not have a display unit, may also be used as the device having a host function of an internal network.

In the first through third embodiments, the process of the control unit of the present invention was described for convenience using a flow-driven flowchart of the processes performed in order according to the process flow, but the present invention is not limited thereto. In the present invention, the processing operations of the control unit may also be performed by an event-driven process that executes processes in event units. In this case, it can be completely event-driven or can be a combination of event-driven and flow-driven.

### [Description of Reference Numerals]

1, 301 Internet communication unit (communication unit)
2, 302 Storage unit
6, 305 Control unit
10, 210 Television (external network-compatible device)
20, 20a-20d Advertising server (server)
22, 23, 24, 322, 323 Advertising information
40 Camera (external network-incompatible device)
50 Printer (external network-incompatible device)
80 Monitor (external network-incompatible device)
100, 200, 300 Advertising system
220 Home network (internal network)
310 Recorder (external network-compatible device)

## Claims

1. An advertising system (100) comprising:
a server (20) that is provided on an external network and that stores advertising information;
an external network-compatible device (10) capable of acquiring the advertising information from the server (20) via the external network; and
an external network-incompatible device (40) that is not capable of acquiring the advertising information from the server (20) via the external network, wherein
the external network-compatible device (10) is configured to acquire, from among the advertising information stored in the server (20), certain advertising information corresponding to the external network-incompatible device (40), and send it to the external network-incompatible device (40).

2. The advertising system (100) according to claim 1, wherein the external network-compatible device (10) is further configured to send to the external network-incompatible device (40) the certain advertising information corresponding to the external network-incompatible device (40) after converting the certain advertising information to a format compatible with the external network-incompatible device (40).

3. The advertising system (100) according to claim 1 or claim 2, wherein the external network-compatible device (10) is further configured to select a certain server from among a plurality of servers on the external network based on identification information of the external network-incompatible device (40), acquire, from the certain server, the certain advertising information corresponding to the external network-incompatible device (40), and send the acquired advertising information to the external network-incompatible device (40).

4. The advertising system (100) according to any of claims 1-3, wherein the external network-compatible device (10) is further configured to incorporate the certain advertising information corresponding to the external network-incompatible device (40) into content information output by the external network-incompatible device (40), and send it to the external network-incompatible device (40).

5. The advertising system (100) according to any of claims 1-3, wherein the external network-compatible device (10) has a host function on an internal network constructed from a plurality of devices including the external network-incompatible device (40).

6. The advertising system (100) according to claim 5, wherein the external network-compatible device (10) is further configured to send to the external network-incompatible device (40) the certain advertising information corresponding to the external network-incompatible device (40) together with control information for the external network-incompatible device (40).

7. The advertising system (100) according to claim 6, wherein the external network-compatible device (10) is further configured to send to another external network-compatible device (30) certain advertising information corresponding to the another external network-compatible device (30) on the internal network together with control information for the another external network-compatible device (30).

8. The advertising system (100) according to any of claims 1-3, wherein the external network-compatible device (10) is further configured to send to the external network-incompatible device (40) the certain advertising information corresponding to the external network-incompatible device (40) during waiting time of a prescribed operation in the external network-compatible device (10).

9. The advertising system (100) according to claim 1, wherein the external network-compatible device (10) comprises a storage unit (2) capable of storing the advertising information acquired from the server (20), and is configured to send to the external network-incompatible device (40) the certain advertising information, from among the advertising information stored in the storage unit (2), corresponding to the external network-incompatible device (40).

10. The advertising system (100) according to claim 9, wherein the advertising information contains deadline information, and
the external network-compatible device (10) is further configured to delete from the storage unit (2) certain advertising information, from among the advertising information stored in the storage unit (2), whose deadline has passed.

11. The advertising system (100) according to claim 1, wherein the external network-compatible device (10) and the external network-incompatible device (40) are each further configured to deliver advertising to a user based on the certain advertising information during waiting time of a prescribed operation.

12. The advertising system (100) according to claim 11, wherein the external network-compatible device (10) is further configured to switch the delivery configuration of advertising that is based on the certain advertising information based on length of the waiting time during the prescribed operation.

13. An advertising method comprising:
acquiring advertising information stored on a server (20) via an external network, and
sending to an external network-incompatible device (40) based on identification information of the external network-incompatible device (40) certain advertising information, from among the advertising information stored in the server (20), corresponding to the external network-incompatible device (40), wherein
the external network-incompatible device (40) is not capable of acquiring the advertising information from the server (20) via the external network.

14. An external network-compatible device (10) comprising:
a communication unit (1) capable of acquiring advertising information stored on a server (20) via an external network, and
a control unit (6) intended to send to an external network-incompatible device (40) based on identification information of the external network-incompatible device (40) certain advertising information, from among the advertising information stored in the server (20), corresponding to the external network-incompatible device (40), wherein
the external network-incompatible device (40) is not capable of acquiring the advertising information from the server via the external network.
